# DEMANDE DE BREVET EUROPEEN

(11) **EP 2 073 510 A1**
(43) Date de publication de la demande: **24.06.2009**
(21) Numéro de dépôt: 07301733.7
(22) Date de dépôt: 21.12.2007
(51) Int. Cl.: H04M 1/2745, H04M 1/725

(54) **Procédé d'enrichissement d'un annuaire électronique provoqué par un changement dans le téléphone associé, et dispositif lié**

(71) Demandeur: GEMPLUS, 13420 Gémenos (FR)
(72) Inventeur: Foesser, Christophe, 13600, LA CIOTAT (FR); Halle, David, 83200, TOULON (FR); Brun, Alain, 13400, AUBAGNE (FR); Mallet, Lionel, 13007, MARSEILLE (FR); Faure, Frédéric, 13260, CASSIS (FR)

(57) **Abrégé**

Procédé d'enrichissement d'un annuaire électronique stocké dans un premier dispositif électronique communicant, en fonction des évolutions d'un second dispositif électronique communicant, et grâce à l'application de règles décisionnelles.

Les évolutions peuvent aussi bien être liées à une évolution des fonctionnalités matérielles, logicielles, ou à une modification des données contenues dans ce second dispositif.

## Description

L'invention concerne un procédé d'enrichissement d'un annuaire électronique provoqué par un changement dans le téléphone associé, et le dispositif lié.

L'invention porte plus particulièrement sur un moyen pour déclencher l'enrichissement d'un annuaire électronique en fonction d'un changement des fonctionnalités logicielles ou matérielles du téléphone associé, conformément à des règles décisionnelles.

La vulgarisation massive des téléphones portables s'est accompagnée d'une multiplication des annuaires électroniques qui leur sont liés. A cela s'est greffée une grande diversification des moyens de communication tels que le courrier électronique ou les messageries instantanées.
Le problème auquel nous sommes confrontés est de maintenir les annuaires électroniques le plus à jour possible.
La majeure partie des solutions existantes est basée sur une action volontaire de l'utilisateur. En effet, dans ces solutions, c'est l'utilisateur qui décide d'adapter le contenu de son annuaire à ses besoins.
D'autre solutions existantes sont basées sur le comportement de l'utilisateur et proposent à l'utilisateur de mettre à jour son annuaire en fonction de certains de ses comportements. Par exemple la réception d'un appel non référencé dans l'annuaire peut déclencher une proposition envers l'utilisateur d'un enregistrement dudit numéro dans l'annuaire électronique. Ces solutions se limitent à compléter un champ de l'annuaire déjà exploité par l'utilisateur. Si l'utilisateur n'a jamais utilisé son téléphone pour envoyer des messages électroniques ces solutions ne proposeront pas de renseigner le champ « adresse électronique ».

Le problème commun à toutes ces solutions existantes est le fait que l'enrichissement de l'annuaire est toujours lié à l'utilisateur. Ainsi c'est toujours en réaction que l'enrichissement est proposé. C'est donc un manque qui déclenche un enrichissement. Il n'existe aucune solution permettant d'enrichir un annuaire électronique en fonction des moyens mis à la disposition de l'utilisateur, sans que celui-ci ait forcément utilisé ou connaissance des moyens précités.

Dans la présente description, nous utiliserons le terme « enrichissement » pour désigner une action consistant à ajouter au moins une information dans au moins un emplacement de l'annuaire électronique. Cette étape est connexe à la présente invention, et fait appel à des mécanismes connus, non décrits dans le présent document.

Dans la présente description, nous utiliserons le terme « modification », appliqué à un dispositif électronique communicant. Ce terme désigne tout changement détectable, dans le dispositif en question, d'une ou plusieurs valeurs, parmi un ensemble fini de valeurs prédéfinies « à surveiller ».

Ainsi ce terme désigne par exemple un changement dans les périphériques connectés au dispositif ou un changement dans des registres stockés en mémoire.
Une valeur « à surveiller » est une valeur ou un paramètre qui a été défini, par des règles décisionnelles selon l'invention, comme devant faire l'objet de surveillance particulière et dont un quelconque changement devait être détecté et transmis.

Dans un premier mode d'implémentation de l'invention, les valeurs à surveiller peuvent se limiter aux paramètres d'un téléphone, liés à l'identité et au type de réseau auquel ledit téléphone est relié. Dans un autre mode d'implémentation, ces valeurs peuvent, en plus, inclure une liste de périphériques reliés au téléphone, de registres contenant des clefs numériques de communication, ainsi que de différents media de communication disponibles via le téléphone (bluetooth, wifi, infra rouge ...). Dans un troisième mode d'implémentation, toute valeur liée au téléphone peut être considérée comme « à surveiller », registres, contenu de chacune des mémoires du téléphone, paramètres matériels ...

Dans la présente description, nous utiliserons le terme "règles décisionnelles" pour désigner un ensemble d'instructions qui permettent de définir, en fonction de un ou plusieurs paramètre(s) en entrée, la conduite à tenir.
Dans la présente invention, ces règles permettent de désigner les valeurs à surveiller, et les réactions à tenir en fonction des modifications des valeurs ainsi désignées.

Ainsi ces règles permettent, seules ou en combinaison, en fonction des modifications des valeurs à surveiller, et en fonction de l'annuaire électronique, de bâtir une stratégie d'enrichissement. Cette stratégie va par exemple définir s'il y a lieu d'enrichir l'annuaire électronique. Dans l'affirmative, ladite stratégie définit la portée de l'enrichissement, le moment, avec quelles données. Ladite stratégie stipule si l'assentiment de l'utilisateur est requis ou non avant de procéder audit enrichissement.
Ces règles ont de plus, la propriété d'être modifiables. Ces modifications peuvent survenir par exemple en fonction de l'évolution fonctionnelle du téléphone, de l'annuaire, suite à un événement externe comme par exemple la réception d'un message, ou bien une action de l'utilisateur.

La présente invention vise à pallier les inconvénients des solutions de l'art antérieur afin d'assurer l'optimisation des données de l'annuaire électronique d'un téléphone en fonction des évolutions dudit téléphone.

Pour cela, la présente invention est un procédé d'enrichissement d'un annuaire électronique stocké dans un premier dispositif électronique communicant, ce premier dispositif électronique communicant étant relié à un second dispositif électronique communicant apte à établir une communication téléphonique, ce premier dispositif étant apte à enrichir ledit annuaire électronique, et mettant en oeuvre ledit procédé d'enrichissement, ce procédé comprend entre autre les étapes de :
- détection, durant laquelle une modification d'un paramètre à surveiller dudit second dispositif électronique communicant est automatiquement détectée par ledit premier dispositif électronique ;
- diagnostic, durant laquelle, après réception de l'événement déclencheur, est réalisé un diagnostic du second dispositif électronique communicant ;
- traitement, durant laquelle des règles décisionnelles prédéfinies sont appliquées au diagnostic, et un enrichissement de l'annuaire électronique est planifié.

Selon un mode de réalisation, l'étape de diagnostic peut comporter une analyse des informations liées entre autre au matériel qui compose le second dispositif électronique communicant, ou bien une analyse des informations liées entre autre aux éléments logiciels embarqués dans le second dispositif électronique communicant, voire une analyse de tout ou partie des données contenues dans une mémoire dudit second dispositif électronique communicant.

Selon un mode de réalisation, l'étape de détection comporte une détection d'une modification pouvant être liée soit au matériel qui compose ledit second dispositif électronique communicant, soit aux éléments logiciels embarqués dans ledit second dispositif électronique communicant, soit aux données contenues dans ledit second dispositif électronique communicant.

La présente invention est également un dispositif électronique communicant apte à enrichir ledit annuaire électronique, qui comprend :
- des moyens pour détecter des modifications d'un paramètre à surveiller d'un second dispositif électronique communicant ;
- des moyens pour identifier les modifications dudit second dispositif électronique communicant survenues, au travers d'un diagnostic dudit second dispositif électronique communicant ;
- des moyens pour stocker des règles décisionnelles ;
- des moyens pour analyser ces règles décisionnelles au regard dudit diagnostic ;
- des moyens pour planifier un enrichissement de l'annuaire électronique.

Ce dispositif électronique communicant peut stocker, dans une mémoire non volatile, les informations issues du dernier diagnostic effectué.
Ce dispositif électronique communicant peut stocker, dans une mémoire non volatile, l'annuaire électronique.

D'autres caractéristiques et avantages de l'invention ressortiront clairement de la description qui en est faite ci-après, à titre indicatif et nullement limitatif, en référence aux dessins annexés dans lesquels :

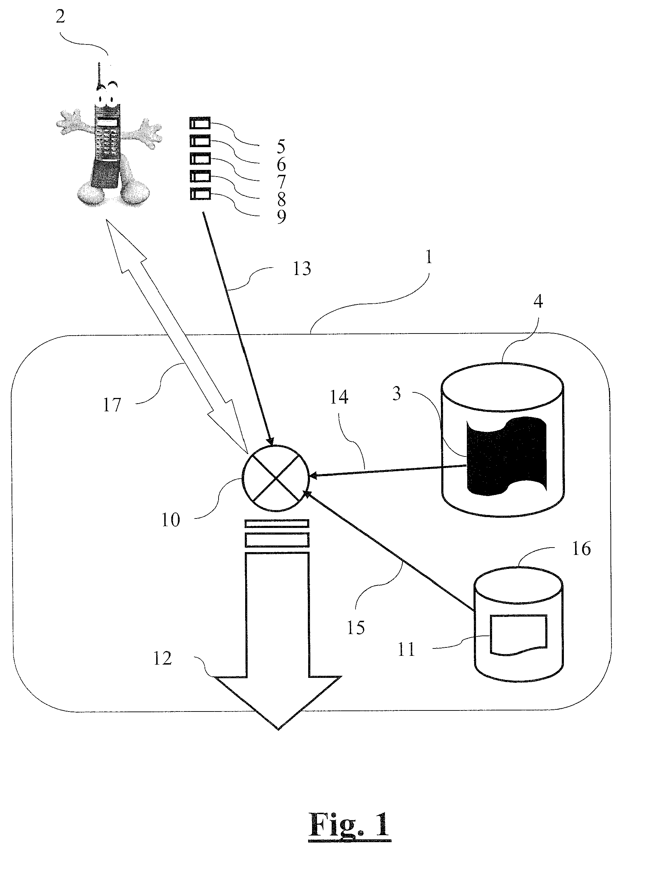

La figure 1 représente un système d'enrichissement d'un annuaire électronique selon l'invention.

Dans la figure 1, le premier dispositif électronique est une carte à puce 1, et le deuxième dispositif électronique communicant est un téléphone portable 2.

La figure 1 représente un mode particulier de réalisation dans lequel le procédé est mis en oeuvre par la carte à puce 1. Nous développerons plus loin que le procédé selon l'invention peut aussi être implémenté dans le téléphone 2, voire dans un dispositif tiers.
L'annuaire électronique 3 susceptible d'être enrichi est stocké dans une mémoire 4 de la carte 1.
Un ensemble de paramètres 5, 6, 7, 8, 9 liés au téléphone sont identifiés.
Parmi ces paramètres, nous trouverons par exemple :
- la liste 5 des accessoires connectés au téléphone 2. Ce paramètre est particulièrement intéressant car il permet de révéler l'adjonction par exemple de « kit mains libres » ou la connexion du téléphone avec un agenda électronique ou un ordinateur ;
- une zone 6 en mémoire comportant l'identifiant du réseau auquel le téléphone 2 est actuellement connecté ;
- une zone 7 en mémoire contenant le type de réseau auquel le téléphone 2 est actuellement connecté. Ce type peut par exemple permettre de reconnaître un réseau de deuxième génération, un réseau de troisième génération, etc... ;
- la liste 8 des applications logicielles installées dans le téléphone 2 ;
- une référence 9 à une donnée enregistrée dans la mémoire du téléphone 2.

Lorsqu'un de ces paramètres 5, 6, 7, 8, 9, se trouve modifié, la carte à puce 1 le détecte. Cette détection peut se faire de plusieurs manières. Une solution, illustrée par la figure 1, consiste à déléguer la détection des modifications à des moyens logiciels contenus dans le téléphone 2 qui vérifient régulièrement les valeurs des paramètres 5, 6, 7, 8, 9 et envoient une alerte 13 à un programme 10, hébergé dans la carte à puce 1, lorsque une telle modification a lieu. Cette alerte peut se faire, par exemple, par la transmission d'un message, d'un signal électrique, ou d'une interruption. Une autre solution consiste à faire cette vérification depuis la carte à puce 1. Dans ce mode de réalisation, la carte 1 conserve dans une mémoire locale la valeur précédemment lue des paramètres 5, 6, 7, 8, 9, et interroge régulièrement le téléphone afin de comparer les valeurs actuelles des paramètres 5, 6, 7, 8, 9, avec les valeurs mémorisées. Dans cette solution le procédé selon l'invention n'utilise pas d'alerte 13.

Après détection de la modification de tout ou partie des paramètres 5, 6, 7, 8, 9, le procédé selon l'invention va automatiquement requérir un diagnostic 17 du téléphone 2.

Cette étape de diagnostic peut prendre de nombreuses formes différentes selon les modes de réalisation. Dans un de ces modes le diagnostic peut se limiter à la lecture des valeurs de tout ou partie des paramètres 5, 6, 7, 8, 9. Dans un autre mode de réalisation, le diagnostic porte sur des éléments qui ne sont pas forcément directement liés aux paramètres.
Par exemple la liste 5 à été modifiée. Dès réception du alerte 13 par le programme 10, la phase de diagnostic interroge le téléphone sur la nature des modifications qui sont survenues au sujet des accessoires connectés. Dans cet exemple le diagnostic va au-delà de la simple lecture de la valeur du paramètre 5.

Dans le cas d'une modification de la zone 7 en mémoire contenant le type de réseau auquel le téléphone 2 est actuellement connecté, le diagnostic 17 peut consister uniquement en une lecture de la nouvelle valeur de la zone 7 en mémoire.

Dans un mode particulier d'implémentation de l'invention, l'alerte 13 peut contenir la valeur du ou des paramètres 5, 6, 7, 8, 9 qui ont étés modifiés. Dans ce cas, l'alerte peut faire office de diagnostic.

Une fois en possession du diagnostic du téléphone 2, selon le procédé de l'invention, le programme 10 entre dans une étape de traitement qui fait appel à des règles décisionnelles 11 stockées dans la mémoire 16 de la carte 1.
Dans un mode particulier de réalisation, ces règles peuvent être hébergées dans un dispositif électronique autre que la carte 1.

Ces règles décisionnelles vont permettre une prise de décision automatique en fonction des informations obtenues par l'étape de diagnostic. Il est envisageable que cette étape de traitement exige un complément d'informations qui peuvent être obtenues par un complément de diagnostic 17, ou une consultation 14 de l'annuaire 3.
L'accès 14 à l'annuaire électronique 3 peut nécessiter l'établissement d'une connexion vers un dispositif tiers si celui-ci contient l'annuaire 3, et le téléchargement 14 de celui-ci.

La conclusion de l'étape de traitement peut être de planifier l'enrichissement 12 de l'annuaire électronique 3, ou bien de ne pas planifier un tel enrichissement 12.

Par exemple le diagnostic 17, déclenché par une modification de la liste 5, fait ressortir que le kit main libre a été débranché du téléphone. Dans ce cas, l'application des règles décisionnelles peut aboutir à une décision de ne pas enrichir l'annuaire électronique 3.

La planification d'enrichissement 12 consiste en la définition des éléments de l'annuaire l'électronique à mettre à jour, et en la planification de cette mise à jour dans le temps. Le procédé de mise à jour en lui-même n'est pas décrit dans la présente invention et, dans notre exemple, s'appuiera sur des procédés bien connus de l'homme du métier.

Dans un mode d'implémentation du procédé selon l'invention, l'application des règles 11 suite à la détection 13 de l'installation d'une application de messagerie électronique dans le téléphone 2 entraîne automatiquement la planification d'un enrichissement de l'annuaire électronique 3 sous la forme d'une collecte d'information permettant d'obtenir les adresses électroniques correspondant aux noms présents dans l'annuaire, lors de la connexion suivante à internet.

Dans un mode d'implémentation du procédé selon l'invention, la planification de l'enrichissement de l'annuaire peut être assujettie à une action de l'utilisateur. Cette action peut être un acquittement, ou une action plus complexe comme par exemple le renseignement d'un champ particulier ou l'établissement d'une connexion particulière. Un enrichissement 12 peut, par exemple, nécessiter que l'utilisateur fournisse un identifiant et un mot de passe permettant l'accès à une base de données distante.

L'ensemble des règles décisionnelles 11 selon l'invention, peut être aisément mis à jour. Cette mise à jour peut se faire par l'utilisateur lui même, ou au travers de messages reçus par le téléphone. Ces messages peuvent, par exemple, être envoyés par un ordinateur au travers de la liaison qui le relie au téléphone ou bien au travers de messages dit SMS (pour Short Messages Services) reçus par le téléphone au travers du réseau de téléphonie sans fil, ou tout autre moyen de communication, par exemple, de type radiofréquence.

Ces mises à jour de règles décisionnelles 11 permettent d'assurer un fonctionnement optimal de l'invention dans des contextes non prévus précédemment. Une telle situation peut se présenter par exemple face à de nouveaux types de réseau ou de nouvelles fonctionnalités disponibles. Par exemple une ou plusieurs nouvelles règles peuvent être envoyées par l'opérateur téléphonique de l'utilisateur si cet opérateur décide nouvellement de fournir un service de messagerie instantanée. Dès lors selon l'invention, si l'utilisateur installe, dans le téléphone, un programme de messagerie instantanée, la liste 8 des applications logicielles installées dans le téléphone 2 en sera modifiée, et selon le procédé de l'invention, suite à la détection 13 de cette modification, un diagnostic du téléphone sera déclenché et mettra cette nouvelle application en exergue.

L'application des nouvelles règles décisionnelles va, par exemple, permettre au programme 10 :
- de proposer à l'utilisateur de renseigner les paramètres de connexion si il les a, puis,
- de planifier un enrichissement de l'annuaire électronique pour essayer de trouver les identifiants, de cette messagerie instantanée, liés aux personnes enregistrées dans l'annuaire.

Selon les modes de réalisation, les dispositifs 1 et 2 peuvent être reliés de différentes manières. Par exemple la carte peut être physiquement en contact avec le téléphone, ce qui est le cas général des téléphones portables qui embarquent une carte SIM ((Subscriber Identity Module pour module d'identification du souscripteur).

Dans un autre mode de réalisation les deux dispositifs peuvent être reliés par exemple au moyen d'une liaison de type radiofréquence.

Le procédé selon l'invention peut avantageusement être implémenté dans un système comportant un seul dispositif électronique qui comporterait à la fois les fonctionnalités de la carte et celles du téléphone.
Dans ce cas, l'annuaire électronique, les règles décisionnelles et le procédé selon l'invention sont tous rassemblés physiquement dans un même dispositif qui fait également office de téléphone. Dans ce cas les dispositifs décrits plus hauts ne sont distingués que d'une manière purement fonctionnelle.

Le procédé selon l'invention peut également être implémenté dans un système comportant 3 dispositifs électroniques communicants, physiquement indépendants: L'un contenant l'annuaire, un autre faisant office de téléphone, et un troisième chargé, entre autre, d'implémenter le procédé selon l'invention.
Ce mode de réalisation peut se faire par exemple en ajoutant un agenda électronique en liaison avec le téléphone et la carte à puce.

La présente invention s'applique également à l'enrichissement de l'annuaire électronique dans sa structure et ses paramètres de configuration autant que dans ses données.

## Revendications

1. Procédé automatique d'enrichissement d'un annuaire électronique (3) stocké dans un premier dispositif électronique communicant (1), ledit premier dispositif électronique communicant (1) étant relié à un second dispositif électronique communicant (2) apte à établir une communication téléphonique, ledit premier dispositif (1) étant apte à enrichir ledit annuaire électronique (3), et mettant en oeuvre ledit procédé d'enrichissement, **caractérisé en ce que** le procédé comporte les étapes de :
• détection (13), durant laquelle une modification d'un paramètre à surveiller (5, 6, 7, 8, 9) dudit second dispositif électronique communicant (2) est automatiquement détectée par ledit premier dispositif électronique (1) ;
• diagnostic (17), durant laquelle un diagnostic (17) dudit second dispositif électronique communicant (2) est réalisé, permettant d'identifier les modifications survenues ;
• traitement (10), durant laquelle des règles décisionnelles (11) prédéfinies sont appliquées audit diagnostic (17), et un enrichissement (12) dudit annuaire électronique (13) est planifié.

2. Procédé selon la revendication 1 **caractérisé en ce que** l'étape de diagnostic (17) comporte une analyse d'informations concernant au moins un matériel qui compose ledit second dispositif électronique communicant (2) .

3. Procédé selon l'une quelconque des revendications précédentes, **caractérisé en ce que** l'étape de diagnostic (17) comporte une analyse des informations concernant au moins un élément logiciel embarqué dans ledit second dispositif électronique communicant (2).

4. Procédé selon l'une quelconque des revendications précédentes, **caractérisé en ce que** l'étape de diagnostic (17) comporte une analyse de tout ou partie des données contenues dans une mémoire dudit second dispositif électronique communicant (2).

5. Procédé selon l'une quelconque des revendications précédentes, **caractérisé en ce que** l'étape de détection comporte une détection d'une modification concernant le matériel relié audit second dispositif électronique communicant (2) .

6. Procédé selon l'une quelconque des revendications précédentes, **caractérisé en ce que** l'étape de détection comporte une détection d'une modification d'éléments logiciels embarqués dans ledit second dispositif électronique communicant (2).

7. Procédé selon l'une quelconque des revendications précédentes, **caractérisé en ce que** l'étape de détection comporte une détection d'une modification de données contenues dans ledit second dispositif électronique communicant (2).

8. Dispositif électronique communicant apte à enrichir ledit annuaire électronique **caractérisé en ce qu'**il comprend :
• des moyens pour détecter au moins une modification (13) d'un paramètre à surveiller (5, 6, 7, 8, 9) d'un second dispositif électronique communicant (2) ;
• des moyens pour identifier les modifications dudit second dispositif électronique communicant (2) survenues, au travers d'un diagnostic (17) dudit second dispositif électronique communicant (2) ;
• des moyens (16) pour stocker des règles décisionnelles (11) ;
• des moyens (10) pour analyser lesdites règles décisionnelles (11) au regard dudit diagnostic (17) ;
• des moyens pour planifier un enrichissement (12) dudit annuaire électronique (3).

9. Dispositif électronique communicant selon la revendication 9 **caractérisé en ce qu'**il stocke, dans une mémoire non volatile (4), les informations issues du dernier diagnostic (17) effectué.

10. Dispositif électronique communicant selon l'une des revendications 8 ou 9, **caractérisé en ce qu'**il stocke, dans une mémoire non volatile (4), ledit annuaire électronique.
